# EUROPEAN PATENT APPLICATION

(11) **EP 4 787 327 A1**
(43) Date of publication of application: **05.08.2026**
(21) Application number: 24885290.7
(22) Date of filing: 09.09.2024
(51) Int. Cl.: G06T 19/00

(54) **FOOT SHAPE MODEL PRESENTATION DEVICE, FOOT SHAPE MODEL PRESENTATION METHOD, AND PROGRAM**

(30) Priority: 02.11.2023 JP 2023188823
(71) Applicant: ASICS Corporation, Kobe-shi, Hyogo 650-0021 (JP)
(72) Inventor: TSUTSUI Masayuki, Kobe-shi Hyogo 650-0021 (JP); NAKAYA Mai, Kobe-shi Hyogo 650-0021 (JP); KUSUMI Hiroyuki, Kobe-shi Hyogo 650-0021 (JP)
(74) Representative: TBK
(86) International application number: PCT/JP2024/032161
(87) International publication number: WO 2025/094513

(57) **Abstract**

A foot shape model presentation apparatus 60 includes an acquirer 64, a reference storer 68, an extractor 66, a generator 70, and a presenter 72. The acquirer 64 acquires an image of a foot shape of a user 10. The reference storer 68 stores a reference model that is a three-dimensional model obtained by averaging foot shapes. The extractor 66 extracts shape information indicating a feature of a predetermined portion of the foot shape of the user 10 from the image. The generator 70 generates an individual shape model that is a three-dimensional model reproducing the foot shape of the user 10 by deforming, based on the shape information, a shape of a portion corresponding to the predetermined portion in the reference model. The presenter 72 visualizes the individual shape model and presents the individual shape model to the user 10.

## Description

### TECHNICAL FIELD

The present disclosure relates to a foot shape model presentation apparatus, a foot shape model presentation method, and a program.

### BACKGROUND ART

There is known a technique capable of simply measuring a foot size of a user based on a captured image of the foot of the user (see, for example, Patent Literature 1). According to the technique described in Patent Literature 1, since the user can easily measure his/her foot size, it can be utilized when selecting footwear having a size suitable for the foot of the user. In addition, Patent Literature 1 describes that a three-dimensional model of the foot of the user (foot-type model) can be generated and the generated foot-type model can be displayed.

### RELATED-ART LITERATURE

### PATENT LITERATURE

Patent Literature 1: WO 2020/059716 A

### SUMMARY OF INVENTION

### TECHNICAL PROBLEM

In the technique described in Patent Literature 1, contour data of the entire foot of the user and foot-type model data stored in advance are combined to generate the foot-type model of the user. Although the foot-type model generated in this manner reflects the contour of the entire foot of the user, it is difficult to say that the foot-type model reflects features of the foot of the user, and the foot-type model is likely to give an inorganic impression.

The present disclosure has been made in view of such a situation, and an object of the present disclosure is to provide a technique capable of presenting a foot shape model that more reflects features of a foot of a user.

### SOLUTION TO PROBLEM

A foot shape model presentation apparatus according to one aspect of the present disclosure includes: an acquirer structured to acquire an image of a foot shape of a user; a reference storer structured to store a reference model that is a three-dimensional model obtained by averaging foot shapes; an extractor structured to extract shape information indicating a feature of a predetermined portion of the foot shape of the user from the image; a generator structured to generate an individual shape model that is a three-dimensional model reproducing the foot shape of the user by deforming, based on the shape information, a shape of a portion corresponding to the predetermined portion in the reference model; and a presenter structured to visualize the individual shape model and present the individual shape model to the user.

Another aspect of the present disclosure is a foot shape model presentation method. This method includes: a process of acquiring an image of a foot shape of a user; a process of extracting shape information indicating a feature of a predetermined portion of the foot shape of the user from the image; a process of generating an individual shape model that is a three-dimensional model reproducing the foot shape of the user by deforming, based on the shape information, a shape of a portion corresponding to the predetermined portion in a reference model that is a three-dimensional model obtained by averaging foot shapes; and a process of visualizing the individual shape model and presenting the individual shape model to the user.

Another aspect of the present disclosure is a program. This program causes a computer to realize: a function of acquiring an image of a foot shape of a user; a function of extracting shape information indicating a feature of a predetermined portion of the foot shape of the user from the image; a function of generating an individual shape model that is a three-dimensional model reproducing the foot shape of the user by deforming, based on the shape information, a shape of a portion corresponding to the predetermined portion in a reference model that is a three-dimensional model obtained by averaging foot shapes; and a function of visualizing the individual shape model and presenting the individual shape model to the user.

Note that arbitrary combinations of the above components and mutual replacement of the components and expressions of the present disclosure between a method, an apparatus, a program, a temporary or non-temporary storage medium storing a program, a system, and the like are also effective as aspects of the present disclosure.

### ADVANTAGEOUS EFFECTS OF INVENTION

According to one aspect of the present disclosure, it is possible to provide a technique capable of presenting a foot shape model that more reflects features of a foot of a user.

### BRIEF DESCRIPTION OF DRAWINGS

[Fig. 1] Fig. 1 is a schematic diagram illustrating an outline of a foot shape model presentation system.
[Fig. 2] Fig. 2 is a functional block diagram illustrating a schematic configuration of the foot shape model presentation system illustrated in Fig. 1.
[Fig. 3] Fig. 3 is a functional block diagram illustrating a schematic configuration of an extractor illustrated in Fig. 2.
[Fig. 4] Fig. 4 is a diagram schematically illustrating a part of a foot image including a toe region.
[Fig. 5] Fig. 5 is a diagram illustrating an example of a reference model.
[Fig. 6] Fig. 6 is a diagram illustrating an example of an individual shape model.
[Fig. 7] Fig. 7 is a block diagram illustrating a configuration example of the foot shape model presentation system illustrated in Fig. 1.
[Fig. 8] Fig. 8 is a functional block diagram illustrating a schematic configuration of a foot shape model presentation apparatus according to a modification.

### DESCRIPTION OF EMBODIMENTS

Hereinafter, the present disclosure will be described based on a preferred embodiment with reference to the drawings. In the embodiment and modifications, the same or equivalent components are denoted by the same reference numerals, and redundant description is appropriately omitted.

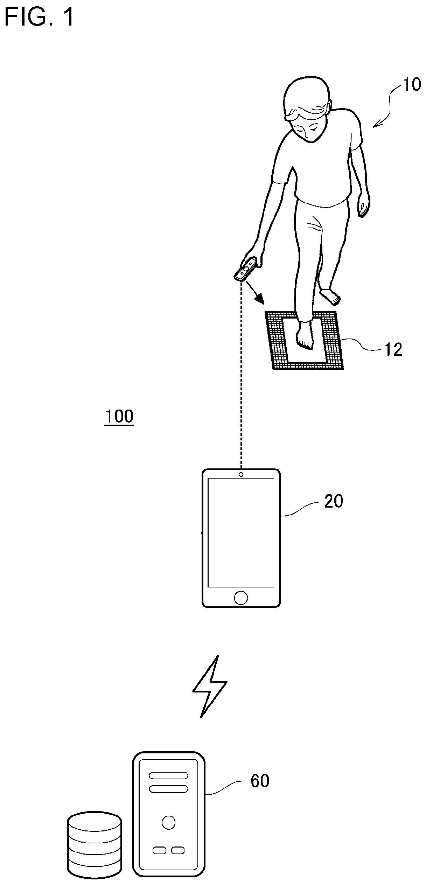

Fig. 1 is a schematic diagram illustrating an outline of a foot shape model presentation system 100. The foot shape model presentation system 100 includes an information terminal 20 and a foot shape model presentation apparatus 60. The information terminal 20 is, for example, a mobile phone terminal, and captures an image of a foot of a user 10 with a built-in camera. The user 10 may operate the information terminal 20 to capture the image of his/her foot, or a person other than the user 10, for example, a clerk of a shoe shop may operate the information terminal 20 to capture the image of the foot of the user 10. Alternatively, the information terminal 20 may automatically capture the image of the foot of the user 10.

The information terminal 20 may capture the image of the foot of the user 10 such that a predetermined reference object is reflected. Here, the "reference object" is a comparison target for measuring the foot length and the foot width of the foot of the user 10 based on the image, and is a planar or three-dimensional object whose size and shape are specified in advance. The "reference object" may be a general-purpose product or a dedicated product as long as the size and shape of the reference object are specified. As the general-purpose product, for example, paper of a prescribed size such as A4 size (210 mm × 297 mm) or letter size can be used. The color of the paper is preferably white, but may be other colors. In this case, the user 10 may place his/her foot on the A4 paper and capture the image of his/her foot using the information terminal 20. As the dedicated product, a measurement mat 12 illustrated in Fig. 1 can be used. In this case, the user 10 may place his/her foot on the measurement mat 12 and capture the image of his/her foot using the information terminal 20. Regardless of whether the general-purpose product or the dedicated product is used as the reference object, a person other than the user 10 may capture the image of the foot of the user 10 using the information terminal 16. The information terminal 16 may capture the image of the foot of the user 10 without using the reference object.

The information terminal 20 may acquire a plurality of images by capturing the image of the foot of the user 10 from a plurality of angles. As a result, an image in which the contours of the tiptoe and the heel and the contours of the left and right sides from the forefoot to the middle foot are reflected is obtained, so that information on the foot length and the foot width can be included in the image. The information terminal 20 may acquire at least one image of the foot of the user 10 captured from above in a state where a portion such as the heel of the foot of the user 10 is aligned with a predetermined place of the reference object. As a result, even if the portion such as the heel is not directly reflected in the image, the position of the portion such as the heel in the image can be specified, so that the information on the foot length and the foot width can be included in the image.

As described above, the information terminal 20 acquires an image of a foot shape (hereinafter, referred to as a "foot image") of the user 10 by capturing the image of the foot of the user 10. The foot image may not include the entire foot of the user 10, but includes at least a predetermined portion such as a toe. The foot image may be a plurality of images or a single image. In addition, the foot image may be a moving image based on a plurality of images acquired in chronological order. The information terminal 20 transmits the foot image to the foot shape model presentation apparatus 60.

The foot shape model presentation apparatus 60 is, for example, a server computer connected to a plurality of the information terminals 20 via a network line such as the Internet or a local area network (LAN) and a means of communication such as wireless communication. In a case where the foot shape model presentation apparatus 60 is the server computer, the foot shape model presentation apparatus 60 may be configured by a single server computer or may be configured by a combination of a plurality of server computers.

Each of the information terminal 20 and the foot shape model presentation apparatus 60 may be configured by a portable terminal or a computer including a central processing unit (CPU), a graphics processing unit (GPU), a random access memory (RAM), a read only memory (ROM), an auxiliary storage device, a display device, a communication device, and the like, and a program stored in the portable terminal or the computer. For example, the program executed on the foot shape model presentation apparatus 60 side may be used from the information terminal 20 side via the means of communication. However, a single device having the functions of the information terminal 20 and the foot shape model presentation apparatus 60 may realize the function of the foot shape model presentation system 100, and the single device may execute a foot shape model presentation program. The single device may be a personal computer, a portable terminal such as a smartphone, or a tablet terminal capable of executing the foot shape model presentation program. Alternatively, the single device may be a terminal installed in a shoe shop and capable of executing the foot shape model presentation program.

The "foot shape model presentation apparatus" referred to in the claims may refer to the entire foot shape model presentation system 100 or may refer to the foot shape model presentation apparatus 60. In the embodiment, since the foot shape model presentation apparatus 60 realizes many of the distinctive functions included in the "foot shape model presentation apparatus" referred to in the claims, the foot shape model presentation apparatus 60 substantially corresponds to the "foot shape model presentation apparatus".

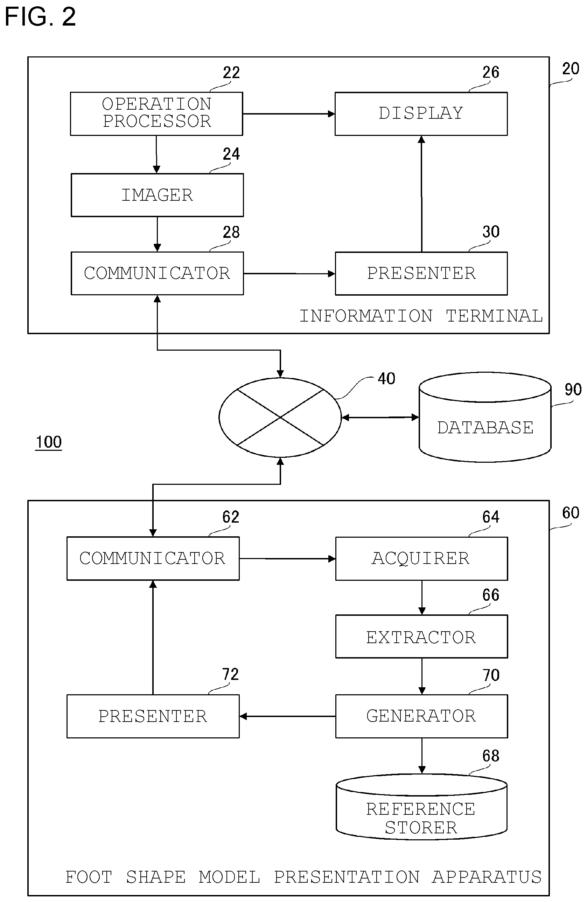

Fig. 2 is a functional block diagram illustrating a schematic configuration of the foot shape model presentation system 100. The functional blocks illustrated in the drawings including Fig. 2 can be realized by an element or a mechanical device such as a processor or a memory of a computer in terms of hardware, and are realized by a computer program or the like in terms of software, but here, functional blocks realized by cooperation thereof are illustrated. These functional blocks can be realized in various forms by hardware, software, or a combination thereof.

The information terminal 20 and the foot shape model presentation apparatus 60 are connected to each other via a network 40. The information terminal 20 includes an operation processor 22, an imager 24, a display 26, a communicator 28, and a presenter 30.

The operation processor 22 receives an operation input of the user 10. The operation processor 22 receives an instruction from the user 10 regarding the start of a series of foot shape measurement programs including the foot shape model presentation program. The display 26 starts screen display of contents of the foot shape measurement program and displays contents related to a measurement procedure based on the instruction received by the operation processor 22. The operation processor 22 and the display 26 may be configured by, for example, a touch panel in terms of hardware.

The imager 24 captures an image of the foot of the user 10 to acquire the foot image based on the instruction received by the operation processor 22. The imager 24 may be configured by, for example, a camera module in terms of hardware. The communicator 28 transmits data of the foot image or the like to the foot shape model presentation apparatus 60 via the network 40. The communicator 28 receives data of the individual shape model or the like from the foot shape model presentation apparatus 60. The individual shape model will be described later. The communicator 28 may be configured by, for example, a wireless communication module such as wireless LAN communication or mobile phone communication in terms of hardware.

The presenter 30 visualizes the individual shape model received from the foot shape model presentation apparatus 60 and presents the individual shape model to the user 10 through screen display by the display 26. The presenter 30 may have a function equivalent to that of a presenter 72 of the foot shape model presentation apparatus 60 described later. In addition, at least one of the functions of these "presenters" may be realized only by the information terminal 20 or only by the foot shape model presentation apparatus 60, or may be realized by cooperation between the information terminal 20 and the foot shape model presentation apparatus 60. That is, after the information terminal 20 receives the data of the individual shape model, the presenter 30 of the information terminal 20 may convert the data of the individual shape model into display data and perform visualization processing, or after the presenter 72 of the foot shape model presentation apparatus 60 converts the data of the individual shape model into the display data and performs the visualization processing, the display data after the conversion may be transmitted to the information terminal 20.

The foot shape model presentation apparatus 60 includes a communicator 62, an acquirer 64, an extractor 66, a reference storer 68, a generator 70, and the presenter 72. The communicator 62 receives the foot image from the information terminal 20 and transmits data of the individual shape model or the like to the information terminal 20. The communicator 62 may be configured by, for example, a communication module such as a wired LAN in terms of hardware.

The acquirer 64 acquires the foot image of the user 10. The acquirer 64 may acquire the foot image from the information terminal 20 via the communicator 62, or may acquire the foot image from other than the information terminal 20. In a case where the acquirer 64 acquires the foot image from other than the information terminal 20, the foot image may be generated by capturing the image of the foot of the user 10 in advance, for example, and may be accumulated in an arbitrary mode.

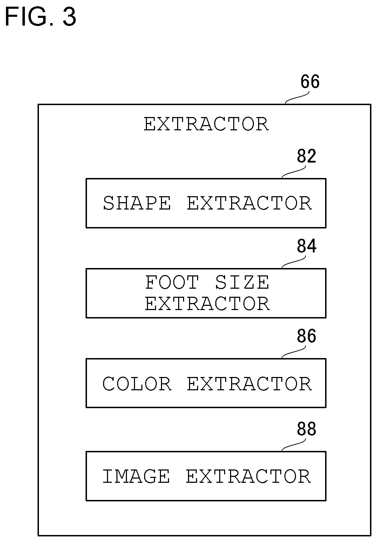

Fig. 3 is a functional block diagram illustrating a schematic configuration of the extractor 66. The extractor 66 includes a shape extractor 82. The shape extractor 82 extracts, from the foot image, shape information indicating a feature of a predetermined portion of the foot shape of the user 10. The shape information is, for example, toe information that defines the appearance of a toe region. The toe region is not limited to the region of the toe itself such as the first toe to the fifth toe, and may be a region on the heel side, for example, a region including up to the MP joint. The toe information includes information on at least one of a toe width, a toe length, a toe orientation, a nail shape, an appearance shape of the toe, an interval between the toes, and an appearance shape around an MP joint.

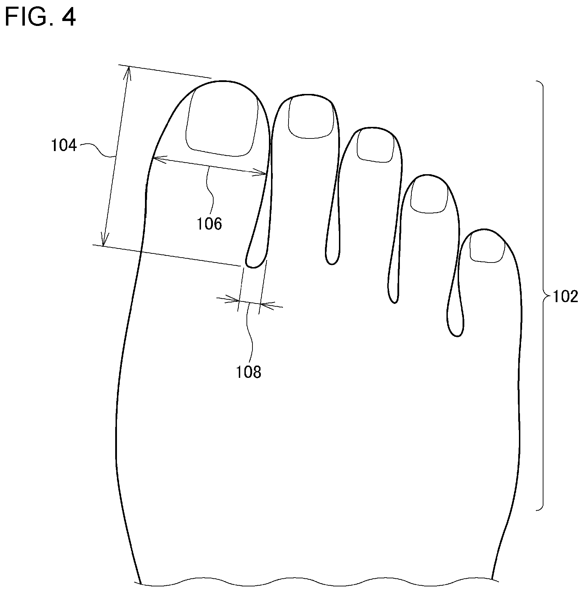

Fig. 4 is a diagram schematically illustrating a part of the foot image including a toe region 102. The toe region 102 is an example of the predetermined portion corresponding to the shape information extracted from the foot image by the shape extractor 82. Fig. 4 illustrates an example of the foot image obtained by capturing an image of the foot of the user 10 from above. The toe information will be mainly described using the first toe as an example, but the toe information may be information about any of the first toe to the fifth toe or information about a plurality of toes. A toe length 104 may be, for example, a length from the proximal end to the distal end of the toe along the longitudinal direction of the toe. A toe width 106 may be, for example, a width along a direction orthogonal to the longitudinal direction of the toe in plan view.

The toe orientation may be an angle formed by the longitudinal direction of the toe with respect to a predetermined reference direction in the foot image. An interval 108 between the toes may be a width of a gap formed between the toes adjacent to each other along a direction orthogonal to the longitudinal direction of one of the two adjacent toes.

The appearance shape of the toe may include information such as an Egypt type in which the first toe protrudes most toward the tiptoe side, a Greek type in which the second toe protrudes most toward the tiptoe side, and a square type in which the positions of the distal ends of the first and second toes in the tiptoe direction are substantially the same. The appearance shape of the toe may include information on whether or not there are symptoms such as hammer toe, claw toe, and mallet toe and the degree thereof.

The nail shape may be a nail size obtained from the vertical width of a region occupied by the nail along the longitudinal direction of the toe and the horizontal width of a region occupied by the nail along the short direction of the toe, an aspect ratio of the nail, a ratio of the nail to the toe, or the like. The nail shape may be information regarding the nail shape of some of the toes such as the first toe, which is largest in general. The nail shape may include, for example, information on whether or not there is a symptom such as an ingrown nail and the degree thereof.

The appearance shape around the MP joint may be an appearance shape of an inner side (hereinafter, also referred to as "medial side") in the width direction of the foot around the MP joint, an appearance shape of an outer side (hereinafter, also referred to as "lateral side") in the width direction of the foot around the MP joint, or the like. The appearance shape of the medial side around the MP joint may include, for example, information on whether or not there is a symptom such as hallux valgus and the degree thereof. The appearance shape of the lateral side around the MP joint may include, for example, information on whether or not there is a symptom such as bunionette and the degree thereof. The appearance shape around the MP joint may include information on whether or not there is a symptom such as splayed foot and the degree thereof.

The shape information extracted from the foot image by the shape extractor 82 is not limited to the toe information. However, the shape information may be information regarding a portion of the foot shape at which a difference in shape is likely to appear depending on the user 10, which is different from at least the information regarding the contour of the entire foot. The shape information may be, for example, information that is not generally used for fitting footwear.

Returning to Fig. 3, the extractor 66 may further include a foot size extractor 84. The foot size extractor 84 extracts foot size information including a foot length and a foot width from the foot image. The foot size information extracted by the foot size extractor 84 may include information other than the foot length and the foot width, and may include, for example, information of a foot circumference, information of a foot height, information of a contour shape of the entire or a part of the foot, and the like.

The information terminal 20 may have functions similar to those of the acquirer 64 and the extractor 66. In this case, the data transmitted from the information terminal 20 to the foot shape model presentation apparatus 60 can be the shape information extracted from the foot image, so that the size of the transmission data can be reduced as compared with a case where the data of the foot image is transmitted.

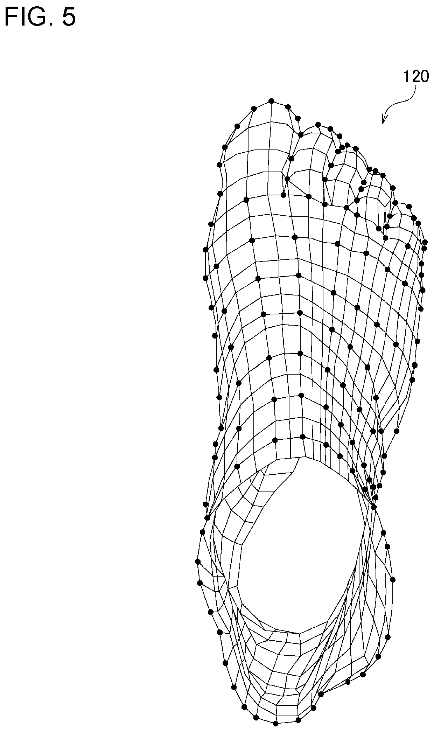

Returning to Fig. 2, the reference storer 68 stores a reference model 120 that is a three-dimensional model obtained by averaging foot shapes. Fig. 5 is a diagram illustrating an example of the reference model 120. The reference model 120 is, for example, three-dimensional point cloud data including a plurality of contour points arranged along the contour of the foot shape. The reference model 120 may be generated, for example, by averaging a plurality of three-dimensional models obtained by scanning foot shapes of a plurality of subjects. The reference model 120 is not limited to one obtained by actually averaging the three-dimensional models obtained from the foot shapes of the plurality of subjects, and may be, for example, an existing three-dimensional model showing an average foot shape, or a three-dimensional model generated based on statistical information regarding various foot sizes such as a foot length, a foot width, a foot circumference, and a foot height. Hereinafter, a case where the reference model 120 is three-dimensional point cloud data will be described.

The reference model 120 is a model capable of expressing the shape of at least a predetermined portion such as the toe region 102 (see Fig. 4). That is, when the predetermined portion is the toe region 102, the reference model 120 includes a plurality of contour points arranged along the contour of the toe region 102 so as to be able to express at least one of the toe toe width, the toe length, the toe orientation, the nail shape, the appearance shape of the toe, and the interval between the toes.

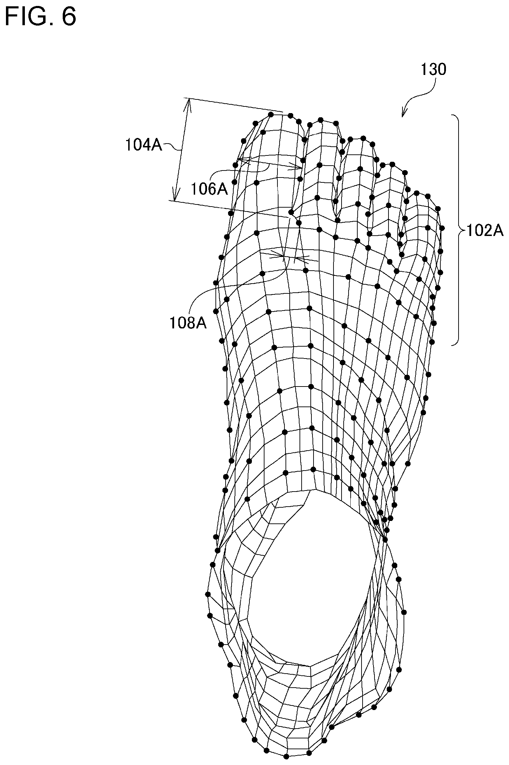

Returning to Fig. 2, the generator 70 generates an individual shape model 130 that is a three-dimensional model reproducing the foot shape of the user by deforming, based on the shape information extracted from the foot image by the shape extractor 82, a shape of a portion corresponding to the predetermined portion in the reference model 120 stored in the reference storer 68. Fig. 6 is a diagram illustrating an example of the individual shape model 130. Specifically, the generator 70 generates the individual shape model 130 by moving each of the plurality of contour points at the portion corresponding to the predetermined portion in the reference model 120 so as to approach the position indicated by the shape information. For example, the generator 70 moves the corresponding contour points such that the toe becomes longer when the toe length 104 in the toe information is longer than the toe length in the reference model 120, and such that the toe becomes shorter when the toe length 104 is shorter than the toe length in the reference model 120. As illustrated in Fig. 6, a toe length 104A, a toe width 106A, and an interval 108A between the toes in a toe region 102A of the individual shape model 130 have sizes respectively corresponding to the toe length 104, the toe width 106, and the interval 108 between the toes in the toe region 102 of the foot image illustrated in Fig. 4.

The generator 70 may not necessarily move the shape of the portion corresponding to the predetermined portion in the reference model 120 so as to approach the shape indicated by the shape information. The generator 70 may deform the shape of the portion corresponding to the predetermined portion in the reference model 120 so as to exaggerate the shape indicated by the shape information. Specifically, the generator 70 may move each of the plurality of contour points at the portion corresponding to the predetermined portion in the reference model 120 to exceed the position indicated by the shape information. As a result, it is possible to further emphasize individual differences in the foot shape of the user 10.

In a case where the extractor 66 includes the foot size extractor 84, the generator 70 may deform the entire shape in the reference model 120 into a shape corresponding to the foot size information extracted by the foot size extractor 84. For example, the generator 70 may deform the reference model 120 such that the foot length and the foot width of the reference model 120 have sizes corresponding to the foot size information.

As illustrated in Fig. 3, the extractor 66 may further include a color extractor 86. The color extractor 86 extracts color information of at least a part of the foot of the user 10 from the foot image. Specifically, the color extractor 86 may extract a color of a partial region of the foot image, or may extract a color obtained by averaging colors of a part or the whole of the foot image.

In a case where the extractor 66 includes the color extractor 86, the generator 70 may generate the individual shape model 130 reflecting the color extracted by the color extractor 86. Specifically, the generator 70 may generate the individual shape model 130 by coloring at least a part of the three-dimensional model obtained by deforming, based on the shape information, the shape of the portion corresponding to the predetermined portion in the reference model 120 with a color based on the color information. The portion to be colored based on the color information in the individual shape model 130 may be the entire individual shape model 130 or a part of the individual shape model 130. When the portion to be colored based on the color information is a part of the individual shape model 130, the portion to be colored may be a portion corresponding to the region of the foot image from which the color is extracted by the color extractor 86. As a result, for example, the skin color, the nail color, and the like of the user 10 can be reflected in the individual shape model 130.

As illustrated in Fig. 3, the extractor 66 may further include an image extractor 88. The image extractor 88 may extract a partial image of a region including at least a part of the predetermined portion from the foot image. The partial image may be a planar image of the entire or partial surface of the predetermined portion. In a case where the extractor 66 includes the image extractor 88, the generator 70 may generate the individual shape model 130 reflecting the partial image extracted by the image extractor 88. Specifically, the generator 70 may generate the individual shape model 130 by pasting the partial image on the surface of the portion corresponding to the predetermined portion with respect to the three-dimensional model obtained by deforming, based on the shape information, the shape of the portion corresponding to the predetermined portion in the reference model 120. As a result, for example, blood vessels, wrinkles, lentigines, scratches, tattoos, and the like visible on the skin surface of the foot of the user 10 can be reflected in the individual shape model 130.

In a case where the extractor 66 includes the color extractor 86 and the image extractor 88, the generator 70 may generate the individual shape model 130 reflecting the color extracted by the color extractor 86 and the partial image extracted by the image extractor 88. In addition, the partial image itself extracted by the image extractor 88 may have color information.

Returning to Fig. 2, the presenter 72 visualizes the individual shape model 130 generated by the generator 70 and transmits the individual shape model to the information terminal 20 via the communicator 62 to present the individual shape model to the user 10. The presenter 72 may generate display information capable of comparing the visualized individual shape model 130 with the size of footwear such as shoes. For example, the presenter 72 may generate the display information in which a translucent image of the footwear is superimposed and displayed on the image of the individual shape model 130 so that the positional relationship and the size difference between the image of the individual shape model 130 and the image of the footwear become clear. As a result, the user 10 can select footwear suitable for his/her foot shape.

In a case where the extractor 66 includes the image extractor 88, the presenter 72 may generate display information in which the partial image is superimposed and displayed at a position corresponding to the predetermined portion with respect to the individual shape model 130. Alternatively, instead of generating the individual shape model 130 by the generator 70, the presenter 72 may generate the display information in which the partial image is superimposed and displayed at the position corresponding to the predetermined portion in the reference model 120. As a result, the foot shape model presentation apparatus 60 can display the portion corresponding to the predetermined portion in the reference model 120 by reproducing the foot shape of the user 10 without necessarily performing the deformation processing on the reference model 120.

The foot shape model presentation apparatus 60 may store the individual shape model 130 generated by the generator 70 in an external database 90. The database 90 may be connected to the foot shape model presentation apparatus 60 via the network 40.

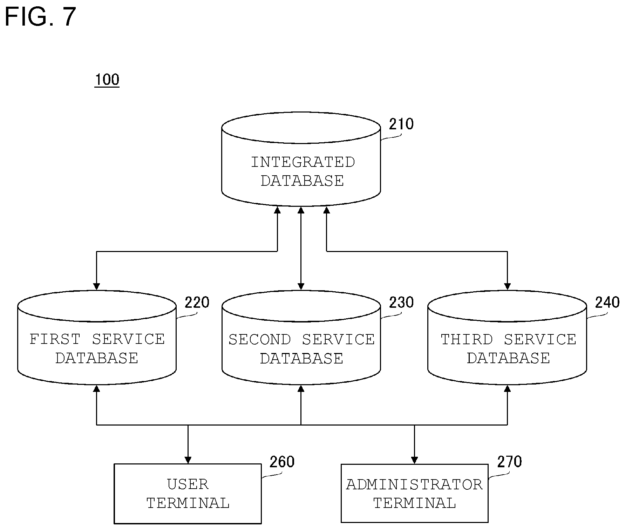

Fig. 7 is a block diagram illustrating a configuration example of the foot shape model presentation system 100. The foot shape model presentation system 100 includes an integrated database 210, a first service database 220, a second service database 230, a third service database 240, a user terminal 260, and an administrator terminal 270. The integrated database 210 is a database server mainly having the function of the foot shape model presentation apparatus 60. The user terminal 260 and the administrator terminal 270 mainly have the function of the information terminal 20. Although Fig. 7 illustrates the first to third service databases 220 to 240, the number of these is not limited to three, and may be two or four or more.

The user terminal 260 is a terminal mainly used by a person who provides foot shape data based on his/her foot image, such as the user 10. The first to third service databases 220 to 240 are database servers for performing management services of different foot shape data. The administrator terminal 270 is a terminal used by a person who manages and operates the first to third service databases 220 to 240, a researcher, or the like.

The user terminal 260 is connected to each of the first to third service databases 220 to 240 via a network or the like, and transmits foot shape data to one of the first to third service databases 220 to 240 according to a service to be used. The first to third service databases 220 to 240 have different data formats of foot shape data to be stored. The administrator terminal 270 is connected to each of the first to third service databases 220 to 240 via a network or the like, and accesses the first to third service databases 220 to 240 according to a form of a service to be provided.

The integrated database 210 is connected to each of the first to third service databases 220 to 240 via a network or the like, and stores normalized data of the individual shape model or the like (hereinafter, referred to as "normalized data") based on the foot shape data stored in each of the first to third service databases 220 to 240. In addition, the integrated database 210 stores the normalized data in association with the foot shape data as a conversion source stored in each of the first to third service databases 220 to 240.

The user terminal 260 and the administrator terminal 270 are connected to the integrated database 210 via a network or the like, and access the normalized data stored in the integrated database 210 as necessary. In addition, the user terminal 260 and the administrator terminal 270 access the foot shape data as the conversion source stored in each of the first to third service databases 220 to 240 associated with the normalized data as necessary.

As described above, even in a case where the foot shape data in different data formats is managed in the plurality of services, the foot shape model presentation system 100 can improve convenience by linking the database servers used for the respective services. In addition, the foot shape model presentation system 100 can use the normalized data while taking advantage of the quality of each service.

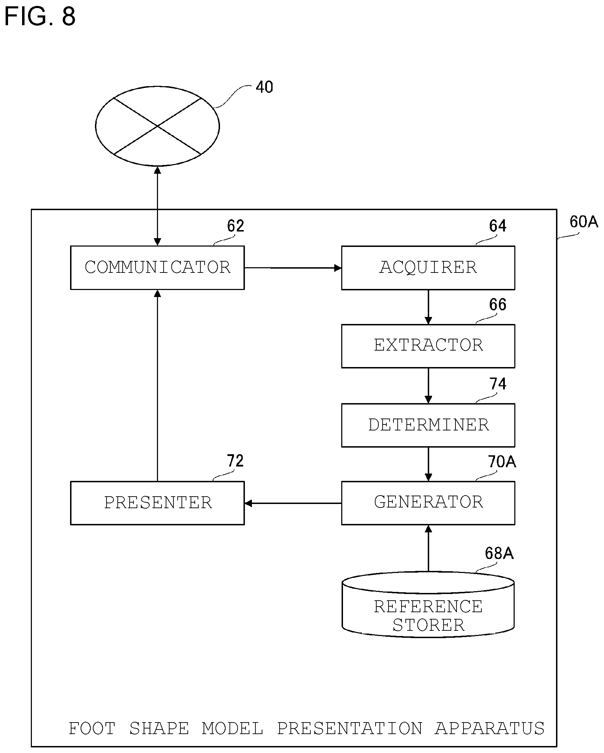

Fig. 8 is a functional block diagram illustrating a schematic configuration of a foot shape model presentation apparatus 60A according to a modification. The foot shape model presentation apparatus 60A includes the communicator 62, the acquirer 64, the extractor 66, a determiner 74, a reference storer 68A, a generator 70A, and the presenter 72. Hereinafter, among the components of the foot shape model presentation apparatus 60A, the determiner 74, the reference storer 68A, and the generator 70A different from the components of the foot shape model presentation apparatus 60 will be described.

The determiner 74 determines the type of the toe information extracted by the extractor 66. The type of the toe information includes, for example, the Egypt type in which the first toe protrudes most toward the tiptoe side, the Greek type in which the second toe protrudes most toward the tiptoe side, and the square type in which the positions of the distal ends of the first and second toes in the tiptoe direction are substantially the same. In addition, the type of the toe information may include types such as hallux valgus and bunionette.

The reference storer 68A stores a plurality of types of reference models respectively corresponding to the types of toe information. The generator 70A generates the individual shape model using the corresponding reference model stored in the reference storer 68A according to the type of the toe information determined by the determiner 74.

The above-described embodiment may be a program for causing a computer to realize a function for realizing the above-described method, or may be a recording medium that stores the program. The recording medium storing such a program may be a non-transitory, tangible computer-readable storage medium, a non-volatile memory, a magnetic recording medium such as a magnetic tape or a magnetic disk, or an optical recording medium such as an optical disk.

The embodiment has been described above. It is to be understood by those skilled in the art that the embodiment is an example, various modifications can be made to combinations of the components and the processing processes, and such modifications are also within the scope of the present disclosure. In addition, the following aspects can be obtained by generalizing the above-described embodiment.

### [Aspect 1]

A foot shape model presentation apparatus including:
an acquirer structured to acquire an image of a foot shape of a user;
a reference storer structured to store a reference model that is a three-dimensional model obtained by averaging foot shapes;
an extractor structured to extract shape information indicating a feature of a predetermined portion of the foot shape of the user from the image;
a generator structured to generate an individual shape model that is a three-dimensional model reproducing the foot shape of the user by deforming, based on the shape information, a shape of a portion corresponding to the predetermined portion in the reference model; and
a presenter structured to visualize the individual shape model and present the individual shape model to the user.

The foot shape model presentation apparatus according to the aspect generates the individual shape model reproducing the foot shape of the user by deforming, based on the shape information indicating the feature of the predetermined portion of the foot shape of the user, the shape of the predetermined portion in the reference model obtained by averaging the foot shapes, visualizes the individual shape model, and presents the individual shape model to the user. Therefore, the foot shape model presentation apparatus according to the aspect can visualize the individual shape model reflecting the characteristics of the user and present the individual shape model to the user, for example, by setting, as the predetermined portion, a portion of the foot shape at which the difference in shape is likely to appear depending on the user. As a result, according to the aspect, since the foot shape model that more reflects the feature of the foot of the user can be presented, it is possible to give the user an impression that the presented foot shape model reproduces his/her foot well. As a result, for example, the user tends to be attached to the presented foot shape model, which can lead to improvement in customer satisfaction and improvement in reliability of the presentation result.

### [Aspect 2]

The foot shape model presentation apparatus according to Aspect 1, in which
the shape information may be toe information that defines an appearance of a toe region, and
the toe information may include information on at least one of a toe width, a toe length, a toe orientation, a nail shape, an appearance shape of a toe, an interval between toes, and an appearance shape around an MP joint.

According to the aspect, the feature of the appearance of the toe region particularly having a large individual difference can be reflected in the individual shape model. Therefore, according to the aspect, since the foot shape model that more reflects the feature of the foot of the user can be presented, it is possible to give the user an impression that the presented foot shape model reproduces his/her foot well.

### [Aspect 3]

The foot shape model presentation apparatus according to Aspect 2, in which
the extractor may further extract foot size information including a foot length and a foot width from the image, and
the generator may deform an entire shape in the reference model into a shape corresponding to the foot size information.

According to the aspect, the entire shape of the individual shape model can be set to an entire shape corresponding to the foot size of the user. Therefore, according to the aspect, since the foot shape model that more reflects the feature of the foot of the user can be presented, it is possible to give the user an impression that the presented foot shape model reproduces his/her foot well.

### [Aspect 4]

The foot shape model presentation apparatus according to Aspect 2 or 3, in which
the foot shape model presentation apparatus may further include a determiner structured to determine a type of the toe information,
the reference storer may store a plurality of types of the reference models each corresponding to the type of the toe information, and
the generator may generate the individual shape model using a corresponding reference model according to the type of the toe information determined by the determiner.

According to the aspect, the individual shape model is generated using the reference model corresponding to the determined type of the toe information. Therefore, for example, by using the reference model having a foot shape with high correlation for each type of the toe information, the individual shape model can be more approximated to the foot shape of the user. Therefore, according to the aspect, since the foot shape model that more reflects the feature of the foot of the user can be presented, it is possible to give the user an impression that the presented foot shape model reproduces his/her foot well.

### [Aspect 5]

The foot shape model presentation apparatus according to any one of Aspects 1 to 4, in which
the extractor may extract color information of at least a part of a foot of the user from the image, and
the generator may generate the individual shape model by coloring at least a part of a three-dimensional model obtained by deforming, based on the shape information, a shape of a portion corresponding to the predetermined portion in the reference model with a color based on the color information.

According to the aspect, the color of the foot of the user can be reflected in the individual shape model. Therefore, according to the aspect, since the foot shape model that more reflects the feature of the foot of the user can be presented, it is possible to give the user an impression that the presented foot shape model reproduces his/her foot well.

### [Aspect 6]

The foot shape model presentation apparatus according to any one of Aspects 1 to 5, in which
the extractor may extract a partial image of a region including at least a part of the predetermined portion from the image, and
the generator may generate the individual shape model by pasting the partial image on a surface of a portion corresponding to the predetermined portion in a three-dimensional model obtained by deforming, based on the shape information, a shape of a portion corresponding to the predetermined portion in the reference model.

According to the aspect, the individual shape model is generated by pasting the partial image of the region including at least a part of the predetermined portion to the surface of the portion corresponding to the predetermined portion in the reference model. Therefore, the texture or the like of the surface of the predetermined portion of the foot of the user can be reflected in the portion corresponding to the predetermined portion in the individual shape model. Therefore, according to the aspect, since the foot shape model that more reflects the feature of the foot of the user can be presented, it is possible to give the user an impression that the presented foot shape model reproduces his/her foot well.

### [Aspect 7]

A foot shape model presentation method including:
a process of acquiring an image of a foot shape of a user;
a process of extracting shape information indicating a feature of a predetermined portion of the foot shape of the user from the image;
a process of generating an individual shape model that is a three-dimensional model reproducing the foot shape of the user by deforming, based on the shape information, a shape of a portion corresponding to the predetermined portion in a reference model that is a three-dimensional model obtained by averaging foot shapes; and
a process of visualizing the individual shape model and presenting the individual shape model to the user.

According to the foot shape model presentation method according to the aspect, the individual shape model reproducing the foot shape of the user is generated by deforming, based on the shape information indicating the feature of the predetermined portion of the foot shape of the user, the shape of the predetermined portion in the reference model obtained by averaging the foot shapes, and the individual shape model is visualized and presented to the user. Therefore, according to the foot shape model presentation method according to the aspect, for example, the individual shape model reflecting the characteristics of the user can be visualized and presented to the user by setting, as the predetermined portion, a portion of the foot shape at which the difference in shape is likely to appear depending on the user. As a result, according to the aspect, since the foot shape model that more reflects the feature of the foot of the user can be presented, it is possible to give the user an impression that the presented foot shape model reproduces his/her foot well.

### [Aspect 8]

A program for causing a computer to realize:
a function of acquiring an image of a foot shape of a user;
a function of extracting shape information indicating a feature of a predetermined portion of the foot shape of the user from the image;
a function of generating an individual shape model that is a three-dimensional model reproducing the foot shape of the user by deforming, based on the shape information, a shape of a portion corresponding to the predetermined portion in a reference model that is a three-dimensional model obtained by averaging foot shapes; and
a function of visualizing the individual shape model and presenting the individual shape model to the user.

According to the program according to the aspect, the individual shape model reproducing the foot shape of the user is generated by deforming, based on the shape information indicating the feature of the predetermined portion of the foot shape of the user, the shape of the predetermined portion in the reference model obtained by averaging the foot shapes, and the individual shape model is visualized and presented to the user. Therefore, according to the program according to the aspect, for example, the individual shape model reflecting the characteristics of the user can be visualized and presented to the user by setting, as the predetermined portion, a portion of the foot shape at which the difference in shape is likely to appear depending on the user. As a result, according to the aspect, since the foot shape model that more reflects the feature of the foot of the user can be presented, it is possible to give the user an impression that the presented foot shape model reproduces his/her foot well.

### INDUSTRIAL APPLICABILITY

The present disclosure relates to a foot shape model presentation apparatus, a foot shape model presentation method, and a program.

### REFERENCE SIGNS LIST

10 user, 30 presenter, 60 foot shape model presentation apparatus, 64 acquirer, 66 extractor, 68 reference storer, 70 generator, 72 presenter, 74 determiner, 102 toe region, 104 toe length, 106 toe width, 108 interval between toes, 120 reference model, 130 individual shape model

## Claims

1. A foot shape model presentation apparatus comprising:
an acquirer structured to acquire an image of a foot shape of a user;
a reference storer structured to store a reference model that is a three-dimensional model obtained by averaging foot shapes;
an extractor structured to extract shape information indicating a feature of a predetermined portion of the foot shape of the user from the image;
a generator structured to generate an individual shape model that is a three-dimensional model reproducing the foot shape of the user by deforming, based on the shape information, a shape of a portion corresponding to the predetermined portion in the reference model; and
a presenter structured to visualize the individual shape model and present the individual shape model to the user.

2. The foot shape model presentation apparatus according to claim 1, wherein
the shape information is toe information that defines an appearance of a toe region, and
the toe information includes information on at least one of a toe width, a toe length, a toe orientation, a nail shape, an appearance shape of a toe, an interval between toes, and an appearance shape around an MP joint.

3. The foot shape model presentation apparatus according to claim 2, wherein
the extractor further extracts foot size information including a foot length and a foot width from the image, and
the generator deforms an entire shape in the reference model into a shape corresponding to the foot size information.

4. The foot shape model presentation apparatus according to claim 2 or 3, further comprising a determiner structured to determine a type of the toe information,
wherein
the reference storer stores a plurality of types of the reference models each corresponding to the type of the toe information, and
the generator generates the individual shape model using a corresponding reference model according to the type of the toe information determined by the determiner.

5. The foot shape model presentation apparatus according to any one of claims 1 to 4, wherein
the extractor extracts color information of at least a part of a foot of the user from the image, and
the generator generates the individual shape model by coloring at least a part of a three-dimensional model obtained by deforming, based on the shape information, a shape of a portion corresponding to the predetermined portion in the reference model with a color based on the color information.

6. The foot shape model presentation apparatus according to any one of claims 1 to 5, wherein
the extractor extracts a partial image of a region including at least a part of the predetermined portion from the image, and
the generator generates the individual shape model by pasting the partial image on a surface of a portion corresponding to the predetermined portion in a three-dimensional model obtained by deforming, based on the shape information, a shape of a portion corresponding to the predetermined portion in the reference model.

7. A foot shape model presentation method comprising:
a process of acquiring an image of a foot shape of a user;
a process of extracting shape information indicating a feature of a predetermined portion of the foot shape of the user from the image;
a process of generating an individual shape model that is a three-dimensional model reproducing the foot shape of the user by deforming, based on the shape information, a shape of a portion corresponding to the predetermined portion in a reference model that is a three-dimensional model obtained by averaging foot shapes; and
a process of visualizing the individual shape model and presenting the individual shape model to the user.

8. A program for causing a computer to realize:
a function of acquiring an image of a foot shape of a user;
a function of extracting shape information indicating a feature of a predetermined portion of the foot shape of the user from the image;
a function of generating an individual shape model that is a three-dimensional model reproducing the foot shape of the user by deforming, based on the shape information, a shape of a portion corresponding to the predetermined portion in a reference model that is a three-dimensional model obtained by averaging foot shapes; and
a function of visualizing the individual shape model and presenting the individual shape model to the user.
